**Europäisches Patentamt**

**European Patent Office**

**Office européen des brevets**

(11) Veröffentlichungsnummer: **0 182 136**
A2

(12) **EUROPÄISCHE PATENTANMELDUNG**

(21) Anmeldenummer: 85113428.8

(22) Anmeldetag: 23.10.85

(51) Int. Cl.⁴: **H 01 B 3/48,** H 01 B 3/02, H 01 B 7/34

(30) Priorität: 17.11.84 DE 3442160
03.10.85 DE 3535267

(43) Veröffentlichungstag der Anmeldung: 28.05.86
**Patentblatt 86/22**

(84) Benannte Vertragsstaaten: **AT BE CH DE FR GB IT LI LU NL SE**

(71) Anmelder: **Akzo GmbH,
Postfach 10 01 49 Kasinostrasse 19-23,
D-5600 Wuppertal-1 (DE)**

(72) Erfinder: **Achtsnit, Hans Dieter, Dr. Dipl.-Chem., Am Sonnenberg 17, D-8751 Elsenfeld (DE)
Erfinder: Herwig, Hans Ulrich, Dr. Dipl.-Phys., Dr. Jordan-Strasse 5, D-8765 Erlenbach (DE)
Erfinder: Kolb, Reinhold, Miltenberger Strasse 26, D-8751 Kleinwallstadt (DE)**

(54) **Mineralisolierte Leitungen.**

(57) Mineralisolierte Leitungen werden erhalten, indem man einen oder mehrere elektrische Leiter, vorzugsweise metallische Leiter mit Kieselsäurestapelfasern isoliert und das Ganze mit einem metallischen Mantel umhüllt. Als Kieselsäurestapelfasern werden Fasern eingesetzt, die hergestellt worden sind durch Behandlung von trockengesponnenen Natronwasserglasfasern, die frei sind von Nichtalkalimetallverbindungen und ein molares Verhältnis von $Na_2O:SiO_2$ von etwa 1:3 bis 1:1,9 aufweisen, mit wäßrigen wasserstoffionenhaltigen Säure- oder Salzlösungen, Waschen, Trocknen sowie gegebenenfalls thermischer Nachbehandlung. Vorzugsweise wird ein Bindemittel mitverwendet, insbesondere alkaliarme oder alkalifreie Bindemittel wie Kieselsol, Bortrioxid, Organosilane u. dgl. Die mineralisolierten Leitungen zeichnen sich durch niedrige elektrische Kapazität, geringe dielektrische Verluste sowie einen hohen elektrischen Widerstand aus. Sie sind innerhalb eines sehr breiten Temperaturbereichs verwendbar. Besonders vorteilhaft lassen sich Meßleitungen, Thermoelemente und Heizleiter herstellen.

0182136

Mineralisolierte Leitungen

A k z o    GmbH

Wuppertal

Die Erfindung betrifft die Verwendung von Kieselsäurestapelfasern, die hergestellt worden sind aus trockengesponnenen Natronwasserglasfasern durch Behandlung mit wasserstoffionenhaltigen Säuren und/oder Salzlösungen, zur Herstellung von mineralisolierten Leitungen.

Mineralisolierte Leitungen sind bereits seit langem bekannt. Man bezeichnet mit mineralisolierten Leitungen Leitungen oder Kabel, die einen oder mehrere, vorzugsweise metallische Leiter, z.B. aus Kupfer in Form von Drähten enthalten, die in eine anorganische Masse, welche aus anorganischem Pulver hergestellt worden ist, eingebettet sind. Diese eingebetteten Leiter einschließlich ihrer anorganischen Isolierung werden von einer metallischen Umhüllung umgeben, dem sogenannten Mantel.

0182136

Derartige mineralisolierte Leitungen werden z.B. in dem Aufsatz E. Mills "Mineral insulated metal sheathed cables" in Wire Industry, Mai 1976, Seite 409 bis 413 beschrieben. Die Isolierung des oder der metallischen Kerne in der mineralisolierten Leitung mittels anorganischer Pulver hat u.a. den Nachteil, daß die Kapazität des Isolators verhältnismäßig hoch ist. Dies ist wesentlich mit bedingt durch die hohe Dielektrizitätskonstante der verwendeten Isolierung aus Pulver.

In der DE-PS 1 103 479 werden Heizdrähte beschrieben, die von einem Metallmantel umgeben und von diesem durch Glasfasern elektrisch isoliert sind. Der zitierten Patentschrift ist ferner zu entnehmen, daß man auch Glasfasern verwenden kann, die mit Salzsäure ausgelaugt wurden, so daß diese Fasern praktisch aus reiner Kieselsäure bestehen.

Glasfasern selbst lassen bezüglich des Isoliervermögens noch Wünsche übrig, ausgelaugte Glasfasern hingegen sind sehr spröde und lassen sich nur äußerst schwierig verarbeiten.

Es besteht deshalb die Aufgabe, mineralisolierte Leitungen zur Verfügung zu stellen, die sich in einfacher wirtschaftlicher Weise herstellen lassen und die eine möglichst niedrige elektrische Kapazität, geringe dielektrische Verluste und einen hohen elektrischen Widerstand aufweisen.

Diese Aufgabe wird gelöst durch eine Verwendung gemäß Anspruch 1. Vorteilhafte Verwendungsformen werden in

einem oder mehreren der Ansprüche 2 bis 11 beschrieben.

Die Herstellung der $SiO_2$-haltigen Stapelfasern, wie sie erfindungsgemäß verwendet werden, geschieht bevorzugt nach einem Verfahren, wie es in der DE-OS 2 900 991 beschrieben wird. Auf die Offenbarung in dieser Offenlegungsschrift wird sich hier ausdrücklich bezogen. Die erwünschte Stapellänge wird vorzugsweise nach dem in dieser Offenlegungsschrift angegebenen Verfahren der Naßvermahlung erreicht.

Die $SiO_2$-haltigen Fasern können vor der Verarbeitung auch einer thermischen Nachbehandlung unterzogen werden. Diese kann nach einer Verfahrensweise, wie sie in der DE-OS 2 900 991 beschrieben wird, durchgeführt werden.

Auch können thermische Nachbehandlungen im Temperaturbereich von 900 bis 1100°C durchgeführt werden.

Alkaliarme bzw. alkalifreie Fasern können gemäß dem in der DE-OS 2 900 991 beschriebenen Verfahren erhalten werden, indem man die Behandlung mit Säure- oder Salzlösungen und das anschließende Waschen besonders sorgfältig und intensiv durchführt.

Die Weiterverarbeitung der erfindungsgemäß für mineralisolierte Leitungen verwendeten $SiO_2$-haltigen Stapelfasern kann auf verschiedene Weise erfolgen.

So können z.B. durch Extrudieren eines die Faser enthaltenden Breis unter Mitverwendung eines Bindemittels entsprechende Hohlkörper, wie z.B. Röhrchen, geformt werden. Die einfache Röhrchenform wird z.B. benötigt bei mineralisolierten Leitungen, die im Inneren nur einen Kern enthalten.

Eine weitere Möglichkeit, derartige Hohlkörper herzustellen besteht z.B. darin, daß man eine wäßrige Dispersion der Fasern unter Mitverwendung eines geeigneten Bindemittels z.B. in eine Hohlzylinderform bringt, die Fasern sich absetzen läßt und das Wasser vorzugsweise am unteren Teil der Form absaugt und durch Nachfüllen der Dispersion und entsprechendes Absaugen die Form mit Fasern weiter anfüllt, bis ein entsprechender Hohlkörper gebildet ist. Anschließend wird der Körper aus der Form entfernt, getrocknet und thermisch z.B. durch Glühen nachbehandelt.

Es ist auch möglich, den Leiter direkt z.B. durch Beschichten oder gemeinsames Extrudieren mit der isolierenden Umhüllung zu umgeben. Auch ist es möglich, durch Stanzen und Bohren aus kompakten $SiO_2$-Stapelfasern enthaltenden Körpern die zur Isolierung dienenden Röhrchen oder sonstigen Formkörper zu erzeugen.

Sollen in den mineralisolierten Leitungen mehrere Kerne vorhanden sein, so versteht es sich von selbst, daß man entsprechende, z.B. rundstabförmige Isolationskörper herstellt, die im Inneren der Zahl der Kerne entsprechende Öffnungen, d.h. in axialer Richtung durchgehende Hohlräume aufweisen. Auch derartige Isolierkörper lassen sich z.B. auf die vorstehend erwähnten Weisen herstellen.

Als Binder, der zur Verarbeitung der Fasern mitverwendet

0182136

wird, eignen sich z.B. Kieselsol, Bortrioxid, auch in Verbindung mit beispielsweise Methylhydroxyäthylcellulose und dgl., siliciumorganische Substanzen wie z.B. Organosilane, Siliconharze, usw. Die Menge des verwendeten Binders und der Wassergehalt können in weiten Grenzen variiert werden. Durch Auswahl der Art und Menge des Binders sowie durch Einstellen des Wassergehalts lassen sich die Eigenschaften insbesondere die Dichte (Porosität) des Isolationskörpers einstellen. So sind Dichten von beispielsweise 0,2 bis 0,8 g/cm³ ohne weiteres realisierbar. Die Binder sind in alkaliarmer oder alkalifreier Aufmachung im Handel erhältlich.

In diese Isolierkörper werden dann die vorgesehenen Leitungen (Kerne) eingezogen, oder die Isolierkörper werden über die Leitungen gezogen. Insbesondere bei längeren Leitungen ist es empfehlenswert, den Isolierkörper aus mehreren Stücken zusammenzusetzen, d.h. mehrere kürzere Isolierkörperabschnitte hintereinander auf dem Leiter aufzureihen.

Der aus den leitenden Kernen und der anorganischen Isolierung bestehende Formkörper wird dann mit einer metallischen Umhüllung, dem sogenannten "Mantel" umgeben. Dies kann z.B. durch einfaches Einschieben des den oder die Leiter enthaltenden Mineralisolierkörper geschehen. Andere Verfahrensweisen sind möglich.

Die mineralisolierten Leitungen können dann durch übliche mechanische Bearbeitung, z.B. durch Hämmern, durch Ziehen, durch Düsen u.dgl. auf den erforderlichen Querschnitt gebracht werden. Es versteht sich von selbst, daß

0182136

je nach eingesetztem Material eine oder mehrere thermische Zwischenbehandlungen, z.B. Zwischenglühungen eingefügt werden können.

Als Material für den oder die Kerne können übliche Leiter wie Kohlenstoff, Metalle oder metallische Legierungen, die als Leiter für elektrische Ströme und elektromagnetische Wellen geeignet sind, verwendet werden. Besonders geeignet sind Materialien, die auch bei höheren Temperaturen, z.B. bis 1000°C noch beständig sind. So sind geeignet Drähte aus Kupfer, Kupferlegierungen, Nickel, Chrom/Nickel-Legierungen, Platin, Wolfram u.dgl. Der oder die leitenden Kerne können die verschiedensten Querschnitte oder Konstruktionen, z.B. runden oder auch rechteckigen Querschnitt besitzen. Metallische Leiter werden bevorzugt.

Das Mantelmaterial kann ebenfalls aus Kupfer oder entsprechenden Legierungen bestehen. Für Anwendungen, bei denen Beständigkeit gegenüber sehr hohen Temperaturen erforderlich ist, können sowohl für die Kerne als auch für den Mantel hochtemperaturbeständige Metalle oder Legierungen eingesetzt werden, wobei u.a. die vorstehend erwähnten Metalle bzw. Legierungen in Frage kommen. Auch temperaturbeständige nichtrostende Stähle können insbesondere für das Mantelmaterial eingesetzt werden.

Es war besonders überraschend, daß es gemäß der Erfindung möglich ist, mineralisolierte Leitungen zu erhalten, deren Isolierung sich durch niedrige Werte der elektrischen Kapazität und der dielektrischen Verluste sowie durch einen sehr hohen elektrischen Widerstand auszeichnen. Da

0182136

die Isolierung sehr temperaturbeständig ist und Temperaturen bis mindestens etwa 1000°C und sogar darüber verträgt, sind die mineralisolierten Leitungen innerhalb eines sehr breiten Temperaturbereichs verwendbar.

Durch die erfindungsgemäße Verwendung lassen sich mineralisolierte Leitungen aller üblichen Dimensionen herstellen. Auch können mineralisolierte Leitungen einer Präzision hergestellt werden, wie sie für die Hochfrequenztechnik benötigt werden. So ist es möglich, die Leiter innerhalb der Isolierung gut und in gleichmäßigem Abstand zum Mantel und gegebenenfalls zueinander anzuordnen. Die erfindungsgemäße Verwendung erlaubt es, Isolierungen mit konstanten Eigenschaften über die ganze Länge der Leitung herzustellen. Von besonderem Vorteil ist, daß die Leitungen auch innerhalb eines großen Temperaturbereichs eingesetzt werden können, ohne daß es bei zunehmender oder abnehmender Temperatur zu Unstetigkeiten der elektrischen Eigenschaften kommt; dies ist vermutlich auf die weitgehend amorphe bzw. nichtkristalline Struktur der verwendeten Fasern zurückzuführen.

Die Kerne, d.h. die Leiter in den mineralisolierten Leitungen sind nicht nur sehr gut gegenüber dem Mantel isoliert, sie sind auch gut voneinander isoliert, d.h. wenn in dem mineralisolierten Leiter zwei oder mehr Kerne vorhanden sind, bewirkt das Isoliermaterial auch eine gute Isolierung der einzelnen Kerne voneinander.

0182136

A3GW32104-i DE

## Patentansprüche

1. Verwendung von $SiO_2$-haltigen Fasern zur Herstellung von mineralisolierten Leitungen durch Isolieren von einem oder mehreren elektrischen Leitern mit $SiO_2$-haltigen Fasern und Umhüllung des oder der isolierten elektrischen Leitern mit einem metallischen Mantel, dadurch gekennzeichnet, daß man zur Isolierung Kieselsäurestapelfasern einsetzt, die hergestellt worden sind durch Behandlung von trockengesponnenen Natronwasserglasfasern, die frei sind von Nichtalkalimetallverbindungen und ein molares Verhältnis von $Na_2O : SiO_2$ von etwa 1 : 3 bis 1 : 1,9 aufweisen, mit wäßrigen wasserstoffionenhaltigen Säure- oder Salzlösungen, Waschen und Trocknen sowie gegebenenfalls thermischer Nachbehandlung und man gegebenenfalls die Fasern unter Mitverwendung eines Bindemittels miteinander verbindet.

2. Verwendung nach Anspruch 1, dadurch gekennzeichnet, daß man Stapelfasern mit einem $SiO_2$-Gehalt von mehr als 95 Gew.-% einsetzt.

3. Verwendung von Anspruch 2, dadurch gekennzeichnet, daß man Stapelfasern mit einem $SiO_2$-Gehalt von mehr als 98 Gew.-% einsetzt.

4. Verwendung nach Anspruch 3, dadurch gekennzeichnet, daß man mit einem $SiO_2$-Gehalt von mehr als 99 Gew.-% einsetzt.

5. Verwendung nach einem der Ansprüche 1-4, dadurch gekennzeichnet, daß man alkaliarme oder alkalifreie Stapelfasern einsetzt.

6. Verwendung nach einem oder mehreren der Ansprüche 1-5, dadurch gekennzeichnet, daß man ein alkalifreies oder alkaliarmes Bindemittel einsetzt.

7. Verwendung nach einem oder mehreren der Ansprüche 1 bis 6, dadurch gekennzeichnet, daß man Kurzschnittstapelfasern mit einer durchschnittlichen Stapellänge von etwa 50 bis 2000 µm einsetzt.

8. Verwendung nach einem oder mehreren der Ansprüche 1 bis 7, dadurch gekennzeichnet, daß man Stapelfasern aus Kieselsäure mit einer nichtkristallinen Struktur einsetzt.

9. Verwendung nach einem oder mehreren der Ansprüche 1 bis 8 zur Herstellung von mineralisolierten Leitungen als Meßleitungen.

10. Verwendung nach einem oder mehreren der Ansprüche 1 bis 8 zur Herstellung von mineralisolierten Leitungen als Thermoelemente.

11. Verwendung nach einem der Ansprüche 1 bis 8 zur Herstellung von mineralisolierten Leitungen als Heizleiter.